# EUROPEAN PATENT APPLICATION

(11) **EP 4 310 158 A2**
(43) Date of publication of application: **24.01.2024**
(21) Application number: 23215301.5
(22) Date of filing: 14.08.2019
(51) Int. Cl.: C09K 5/04

(54) **USE OF REFRIGERANT COMPOSITION**

(30) Priority: 14.08.2018 GB 201813237; 11.02.2019 GB 201901885
(62) Divisional of application: 19768871.6
(71) Applicant: Mexichem Fluor S.A. de C.V., San Luis Potosi, S.L.P. C.P. 78395 (MX)
(72) Inventor: Low,, Robert, Runcorn, WA7 4QX (GB)
(74) Representative: Potter Clarkson

(57) **Abstract**

A refrigerant composition is described comprising 1 comprising 1,1-difluoroethylene (R-1132a), difluoromethane (R-32), 1,1-difluoroethane (R-152a) and at least one tetrafluoropropene refrigerant compound selected from the group consisting of 2,3,3,3-tetrafluoropropene (R-1234yf) and 1,3,3,3-tetrafluoropropene (R-1234ze(E)).

## Description

The present invention relates to a refrigerant composition and more particularly to a refrigerant composition comprising 1,1-difluoroethylene (R-1132a; vinylidene fluoride) that is useful in a mobile or automotive heat pump system, especially systems for electric vehicles.

The listing or discussion of a prior-published document or any background in the specification should not necessarily be taken as an acknowledgement that a document or background is part of the state of the art or is common general knowledge.

The introduction of electric vehicles, where there is no combustion engine to provide a source of heat for the passenger cabin, has meant increasing focus on use of the vehicle air-conditioning unit to run as a heat pump in cold weather. This can be accomplished by reversing the direction of refrigerant flow around the air-conditioning circuit, so that refrigerant is evaporated at low temperature using heat from ambient air and condensed at high temperature against air circulated into the passenger cabin. By using the air-conditioning system in this way, it is possible to deliver more heat to the cabin per unit of electrical energy drawn from the battery than if it were used to provide heat by electrical resistance heating of the incoming cabin air.

The need for passenger air heating is at its highest when outside air is at its coldest, which presents particular challenges for operating the air-conditioning unit as a heat pump. In particular:
- Ambient air temperature can be as low as -25 to -30°C, meaning that to achieve heat pump operation in these conditions the refrigerant should evaporate at temperatures below -30°C.
- Passenger air from the vent into the cabin is ideally heated to 40-50°C, meaning the refrigerant must condense at temperatures higher than 40°C
- Refrigerant evaporation pressure should not fall below 1 atmosphere to avoid ingress of air to the system.
- The same refrigerant fluid should give acceptable performance in air-conditioning and heat pump modes of operation.
- Global Warming Potential (GWP) should be below 150 for new fluids to comply with EU F-Gas regulations.

1,1,1,2-tetrafluoroethane (R-134a) was for some years the refrigerant of choice in automotive air conditioning systems following the phase out of dichlorodifluoromethane (R-12) which being a CFC has a high ozone depletion potential. The EU F-Gas Directive was then implemented which mandates a Global Warming Potential (GWP) limit of 150 for new car mobile air-conditioning (MAC) systems. As a result, the use of R-134a has now been largely superseded for new systems in Europe by the use of flammable 2,3,3,3-tetrafluoropropene (R-1234yf). R-1234yf is slightly less efficient than R-134a and new system designs now include extra equipment (an internal heat exchanger) to recover the loss in efficiency.

Mobile air conditioning systems that use either R-134a or R-1234yf as the refrigerant cannot operate efficiently in heat pump mode if the ambient temperature is lower than about -15 to -20°C, because their evaporation pressure at the required evaporation temperature would drop below atmospheric pressure. Carbon dioxide (R-744) is a high pressure refrigerant which can work well as a low temperature heat pump fluid. However, its performance in air-conditioning mode for car systems is known to be worse (less energy efficient) than either R-134a or R-1234yf at moderate to high ambient air temperatures.

There is a need for a refrigerant composition that can operate efficiently in a mobile, e.g. automotive, heat pump system for heating vehicles, especially electric vehicles. There is a need to find a working refrigerant fluid for use in a combined mobile heat pump/air-conditioner system in an electric vehicle that is capable of operating as a heat pump cycle working fluid with a positive (greater than atmospheric suction pressure) at evaporation temperatures down to about - 30C, whilst also giving acceptable performance (energy efficiency) when used in the air-conditioning mode. Furthermore, any new refrigerant to be developed for an automotive system must have a Global Warming Potential (GWP) of less than 150 to comply with European environmental legislation.

We have found that compositions of 1,1-difluoroethylene (R-1132a; vinylidene fluoride) with other hydrofluorocarbon refrigerants offer the potential for improved performance compared to R-1234yf when used in automotive heat pump systems, particularly for electric vehicles. The compositions can also offer acceptable performance when used in air-conditioning mode. The compositions are capable of abstracting heat from the environment at lower ambient temperatures than is possible with R-1234yf or R-134a and in addition can offer improved energy efficiency. This is an especially desirable combination of properties for use in electric vehicles, which must otherwise use battery energy to provide heat for passenger comfort.

Accordingly, in a first aspect the present invention provides a use as a refrigerant in a heat pump system in an electric vehicle of a composition comprising 1,1-difluoroethylene (R-1132a) and at least one fluorocarbon refrigerant compound selected from the group consisting of 2,3,3,3-tetrafluoropropene (R-1234yf), difluoromethane (R-32), 1,3,3,3-tetrafluoropropene (R-1234ze(E)) and 1,1-difluoroethane (R-152a).

Conveniently, the refrigerant composition further comprises at least one of trifluoroethylene (R-1123), trifluoroiodomethane (CF₃I), carbon dioxide (R-744, CO₂) and 1,1,1,2-tetrafluoroethane (R-134a).

In a further aspect, the invention provides a use as a refrigerant in a heat pump system in an electric vehicle of a composition comprising 1,1-difluoroethylene (R-1132a) and trifluoroiodomethane (CF₃I). Preferably, the refrigerant composition comprises from about 1 to about 30 weight % R-1132a and from about 70 to about 99 weight % CF₃I.

Preferred compositions of the invention contain from 1 to 30 weight % or from 1 to 20 weight %, such as from about 3 to 15 weight % of the 1,1-difluoroethylene (R-1132a) based on the total weight of the refrigerant composition.

In an embodiment, the refrigerant composition comprises 1,1-difluoroethylene (R-1132a), at least one tetrafluoropropene refrigerant compound selected from the group consisting of 2,3,3,3-tetrafluoropropene (R-1234yf) and 1,3,3,3-tetrafluoropropene (R-1234ze(E)) and optionally difluoromethane (R-32). In this embodiment, the R-1132a is preferably present in an amount of from 1 to 20 weight % based on the total weight of the refrigerant composition. Where difluoromethane is included, it is preferably present in an amount of from 1 to 21 weight % based on the total weight of the refrigerant composition. Whether the composition of this first embodiment is a binary or a ternary composition the selected tetrafluoropropene provides the balance of the refrigerant composition.

Preferred compositions of this first embodiment include the following:
(i) A binary refrigerant composition comprising from 1 to 20 weight % 1,1-difluoroethylene (R-1132a) and from 99 to 80 weight % 2,3,3,3-tetrafluoropropene (R-1234yf).
(ii) A binary refrigerant composition comprising from 1 to 20 weight % 1,1-difluoroethylene (R-1132a) and from 99 to 80 weight % 1,3,3,3-tetrafluoropropene (R-1234ze(E)).
(iii) A ternary refrigerant composition comprising from 1 to 20 weight % 1,1-difluoroethylene (R-1132a), from 1 to 21 weight % difluoromethane (R-32) and from 59 to 98 weight % 2,3,3,3-tetrafluoropropene (R-1234yf).
(iv) A ternary refrigerant composition comprising from 1 to 20 weight % 1,1-difluoroethylene (R-1132a), from 1 to 21 weight % difluoromethane (R-32) and from 59 to 98 weight % 1,3,3,3-tetrafluoropropene (R-1234ze(E)).

When trifluoroiodomethane (CF₃I) is included in the composition of the invention, typically it is present in an amount less than R-1234yf or R-1234ze(E). A preferred CF₃I-containing composition of the invention comprises R-1132a, R-32, R-1234yf and CF₃I, such from as 1 to 20 weight % R-1132a, from 1 to 21 weight % R-32, from 5 to 40 weight % CF₃I and from 19 to 93 weight % R-1234yf.

When carbon dioxide (CO₂) is included in the compositions of the invention, typically the combined content of R-1132a and CO₂ is less than about 30 weight %, such as less than about 20 weight %. A preferred CO₂-containing composition of the invention comprises R-1132a, R-32, R-1234yf and CO₂.

In another embodiment, the refrigerant composition comprises R-1132a, R-152a and optionally R-32. Preferred compositions of this embodiment include the following:
(i) A binary refrigerant composition comprising from 1 to 30 weight % R-1132a and from 99 to 70 weight % R-152a.
(ii) A ternary refrigerant composition comprising from 1 to 20 weight % R-1132a, from 1 to 10 weight % R-32 and from 70 to 98 weight % R-152a.

In a further embodiment, the refrigerant composition comprises, optionally consists essentially of, R-1132a, R-152a and R-1234yf. Typically the amount of R-1132a present in such compositions ranges from 1 to 20 weight %. Preferred compositions of this embodiment include a composition comprising from 2 to 14 weight% R-1132a (such as from 4 to 10 weight %), from 2 to 96 weight % R-152a and from 2 to 96 weight % R-1234yf. Preferably, the R-152a is present in such compositions in an amount of from 4 to 80% by weight, such as from 5 to 30 weight %. Preferably, the R-1234yf is present in such compositions in an amount of from 4 to 96% by weight, 60 to 94 weight % R-1234yf.

In a further embodiment, the refrigerant composition comprises R-1132a, R-32, R-152a and at least one tetrafluoropropene refrigerant compound selected from the group consisting of R-1234yf and R-1234ze(E). Preferred compositions of this third embodiment include the following:
(i) A quaternary refrigerant composition comprising from 1 to 20 weight % 1,1-difluoroethylene (R-1132a), from 1 to 21 weight % difluoromethane (R-32) and from 59 to 98 weight % of a mixture of 1,1-difluoroethane (R-152a) and 2,3,3,3-tetrafluoropropene (R-1234yf) in any proportion.
(ii) A quaternary refrigerant composition comprising from 1 to 20 weight % 1,1-difluoroethylene (R-1132a), from 1 to 21 weight % difluoromethane (R-32) and from 59 to 98 weight % of a mixture of 1,1-difluoroethane (R-152a) and 1,3,3,3-tetrafluoropropene (R-1234ze(E)) in any proportion.

The refrigerant compositions of the invention may also contain R-134a, typically in an amount of from about 1 to about 10 weight % based on the total weight of the refrigerant composition. Preferred R-134a-containing compositions include those comprising R-1132a, CF₃I and R-134a; R-1132a, R-1234yf and R-134a; R-1132a, R-1234ze(E) and R-134a; R-1132a, R-1234yf, R-32 and R-134a; R-1132a, R-1234ze(E), R-32 and R-134a; R-1132a, R-1234yf, CF₃I and R-134a; R-1132a, R-1234ze(E), CF₃I and R-134a; R-1132a, R-152a and R-134a; R-1132a, R-152a, R-32 and R-134a; R-1132a, R-1234yf, R-152a and R-134a (such as from about 1 to about 20 weight % R-1132a, from about 5 to about 25 weight % R-152a, from about 1 to about 10 weight % R-134a and from about 93 to about 45 weight % R-1234yf); and R-1132a, R-1234ze(E), R-152a and R-134a.

When trifluoroethylene (R-1123) is included in the compositions of the invention, typically it is present in less than about 30 weight %, such as less than about 20 weight %. A preferred R-1123-containing composition of the invention comprises R-1132a, R-1123 and R-1234yf, preferably from about 1 to about 20 weight % R-1132a, from about 1 to about 20 weight % R-1123 and from about 98 to about 60 weight % R-1234yf. Preferred R-1123 containing compositions are those where the maximum molar content of R-1123 in the blend as formulated and in the vapour in equilibrium with the blend will be less than about 55% at temperatures of -40 °C or higher. This is to reduce the risk of R-1123 disproportionation (self-reaction). The above-described compositions and the tabulated compositions (see Examples 24 to 27 below) are predicted to meet these criteria.

Certain compositions of the present invention comprise, optionally consist essentially of, R-1132a and R-32, preferably from about 68 to about 99 weight % R-1132a and from about 1 to about 32 weight % R-32, for example from about 72 to about 96 weight % R-1132a and from about 4 to about 28 weight % R-32. These compositions may contain substantially no R-1234yf.

Further compositions of the present invention comprise, optionally consist essentially of, R-1132a, R-32 and CO₂, preferably from about 1 to about 20 weight % R-1132a, from about 1 to about 32 weight % R-32 and from about 50 to about 95 weight % CO₂, such as from about 2 to about 15 weight % R-1132a, from about 2 to about 32 weight % R-32 and from about 55 to about 95 weight % CO₂, such as from about 64 to about 93 weight % of carbon dioxide, from about 2 to about 25 weight% of difluoromethane and from about 2 to about 14 weight % of R-1132a, for example from about 65 to about 93 weight % of carbon dioxide, from about 2 to about 22 weight % of difluoromethane and from about 2 to about 14 weight % of R-1132a. These compositions may contain substantially no R-1234yf.

By "substantially no", we include the meaning that the compositions of the invention contain 0.5% by weight or less of the stated component, preferably 0.1% or less, based on the total weight of the composition.

As used herein, all % amounts mentioned in compositions herein, including in the claims, are by weight based on the total weight of the compositions, unless otherwise stated.

In an embodiment, the compositions may consist essentially of the stated components. By the term "consist essentially of", we include the meaning that the compositions of the invention contain substantially no other components, particularly no further (hydro)(fluoro)compounds (e.g. (hydro)(fluoro)alkanes or (hydro)(fluoro)alkenes) known to be used in heat transfer compositions. The term "consist of" is included within the meaning of "consist essentially of".

For the avoidance of doubt, it is to be understood that the stated upper and lower values for ranges of amounts of components in the compositions of the invention described herein may be interchanged in any way, provided that the resulting ranges fall within the broadest scope of the invention.

The refrigerant compositions will typically be combined with a lubricant when used in a heat pump or combined heat pump and air-conditioning system. Suitable lubricants include polyol esters, such as neopentyl polyol esters, and polyalkylene glycols, preferably end capped at one or both ends with an alkyl, e.g. a C₁₋₄ alkyl, group.

The compositions of the invention have zero ozone depletion potential.

Typically, the compositions of the invention have a GWP of less than about 150, such as less than about 100, for example less than about 50.

Typically, the compositions of the invention are of reduced flammability hazard when compared to R-1132a.

Flammability may be determined in accordance with ASHRAE Standard 34 incorporating the ASTM Standard E-681 with test methodology as per Addendum 34p dated 2004, the entire content of which is incorporated herein by reference.

In one aspect, the compositions have one or more of (a) a higher lower flammable limit; (b) a higher ignition energy (c) a higher auto-ignition temperature; or (d) a lower flame velocity compared to R-1132a alone. Preferably, the compositions of the invention are less flammable compared to R-1132a in one or more of the following respects: lower flammable limit at 23°C; lower flammable limit at 60°C; breadth of flammable range at 23°C or 60°C; auto-ignition temperature (thermal decomposition temperature); minimum ignition energy in dry air, or burning velocity. The flammable limit and burning velocity being determined according to the methods specified in ASHRAE-34 and the auto-ignition temperature being determined in a 500ml glass flask by the method of ASTM E659-78.

Preferred compositions of the invention are those which have laminar burning velocity less than 10 cm/s, and especially preferred are those where the formulation and the "worst case fractionated formulation" both have burning velocity below 10 cm/s, meaning that they will be classified as "2L" flammable under ASHRAE Standard 34.

In a preferred embodiment, the compositions of the invention are non-flammable. For example, the compositions of the invention are non-flammable at a test temperature of 60°C using the ASHRAE-34 methodology. Advantageously, the mixtures of vapour that exist in equilibrium with the compositions of the invention at any temperature between about -20°C and 60°C are also non-flammable.

In some applications it may not be necessary for the formulation to be classed as non-flammable by the ASHRAE-34 methodology. It is possible to develop fluids whose flammability limits will be sufficiently reduced in air to render them safe for use in the application, for example if it is physically not possible to make a flammable mixture by leaking the refrigeration equipment charge into the surrounds.

In one embodiment, the compositions of the invention have a flammability classifiable as 1 or 2L according to the ASHRAE standard 34 classification method, indicating non-flammability (class 1) or a weakly flammable fluid with flame speed lower than 10 cm/s (class 2L).

The compositions of the invention preferably have a temperature glide in an evaporator or condenser of less than about 15K, even more preferably less than about 10K, and even more preferably less than about 5K.

The compositions of the present invention are useful in mobile, e.g. automotive, heat pump applications and also exhibit acceptable performance in mobile air-conditioning applications. The compositions may provide particular benefits where the heat pump and/or air-conditioning system is used in an electric vehicle, whether a purely electric or hybrid vehicle.

Unless otherwise stated, it is to be understood that the term "electric vehicle" refers to both purely electric vehicles as well as vehicles which use electricity as one of several means of propulsion, such as hybrid vehicles.

Preferably, in the use of the invention, the refrigerant compositions evaporate at temperatures below about -30°C, thereby enabling heat pump operation at ambient air temperatures as low as -25 to -30°C.

Accordingly, in a further aspect the present invention provides an electric vehicle with a heat pump and/or air-conditioning system which uses a refrigerant composition of the first aspect of the invention. The refrigerant composition can be as described in any of the embodiments discussed above.

Accordingly, the invention also provides (i) a method of producing cooling in an electric vehicle which method comprises evaporating a refrigerant composition of the invention in the vicinity of a body to be cooled; and (ii) a method of producing heating in an electric vehicle which method comprises condensing a refrigerant composition of the invention in the vicinity of a body to be heated.

The invention is illustrated by the following non-limiting examples.

### EXAMPLES

The invention is now illustrated by theoretical cycle modelling of performance of selected compositions of the invention in a heat pump cycle and in an air-conditioning cycle. R-1234yf was chosen as the reference refrigerant for both cycles.

The modelling was carried out in Microsoft Excel using NIST REFPROP10 as the thermodynamic data source. The phase equilibrium of mixtures of R-1132a with R-32 and R-1234yf was first studied using a constant-volume apparatus to measure the vapour pressure of binary mixtures of R-1132a/R-32 or R-1132a/R-1234yf over a range of temperatures from -70C to +40C. This data was then regressed to yield binary interaction parameters for use in REFPROP that reproduced the experimental data.

For the heat pump cycle the following conditions were assumed:

| **Data Input Section** | | **R1234yf** |
|---|---|---|
| Heating duty | kW | 4 |
| Mean condenser temperature | °C | 45 |
| Mean evaporator temperature | °C | -20 |
| Condenser subcooling | K | 5 |
| Evaporator superheat | K | 5 |
| Evaporator pressure drop | bar | 0 |
| Suction line pressure drop | bar | 0 |
| Condenser pressure drop | bar | 0 |
| Compressor suction superheat | K | 10 |
| Isentropic efficiency | | 65% |

The cycle modelled included intermediate pressure vapour injection of refrigerant vapour to improve cycle performance. For each composition the optimum injection pressure was determined so as to maximise the Coefficient of Performance (COP) for heating.

Results for selected binary and ternary mixtures of the invention are summarised in the following Examples 1-8. It was discovered that incorporation of R-1132a increased the COP (energy efficiency) and increased the evaporation pressure of the refrigerants compared to R-1234yf. It also reduced the volumetric flow of refrigerant that would need to be pumped through the system, indicating that pressure drop losses would be reduced compared to R-1234yf. For comparison, modelled performance data of two commercially available blends (R-454C and R-516A) is also provided in the table below:

| **Results** | | **R1234yf** | **R454C** | **R516A** |
|---|---|---|---|---|
| Heating COP | | 3.08 | 3.73 | 3.13 |
| Heating COP relative to reference | | 100.0% | 120.9% | 101.5% |
| Compressor displacement needed | m³/hr | 11.0 | 7.4 | 10.5 |
| Compressor displacement relative to reference | | 100.0% | 67.4% | 95.9% |
| Compressor discharge temperature | °C | 45.6 | 64.5 | 49.7 |
| Discharge temp. difference from reference | K | 0.0 | 18.9 | 4.1 |
| Evaporator inlet pressure | bar | 1.51 | 2.34 | 1.51 |
| Condenser inlet pressure | bar | 11.5 | 17.9 | 11.8 |
| Evaporator glide (out-in) | K | 0.0 | 6.3 | 0.0 |
| Condenser glide (in-out) | K | 0.0 | 6.6 | 0.0 |

### Example 1 (binary compositions comprising R-1132a and R-1234yf)

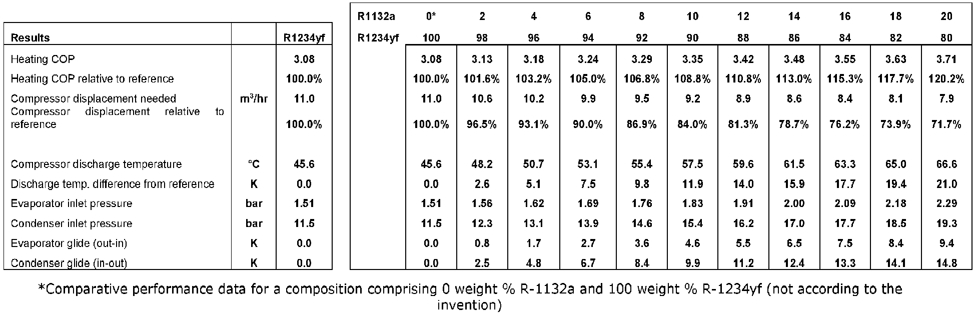

### Example 2 (ternary compositions comprising R-1132a, 4 wt% R-32 and R-1234yf)

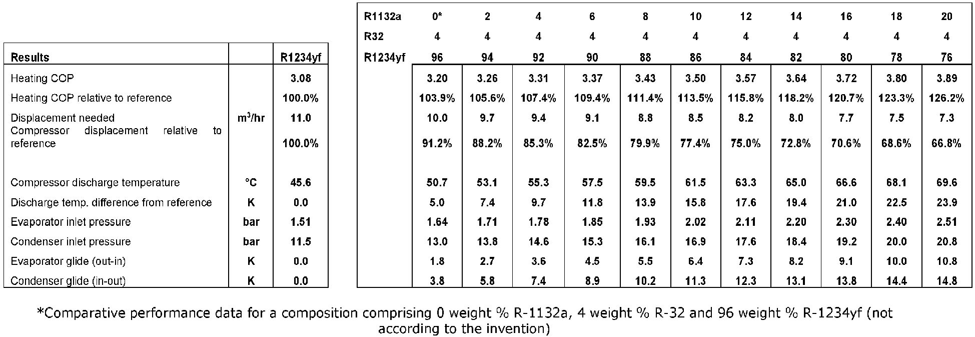

### Example 3 (ternary compositions comprising R-1132a, 12 wt% R-32 and R-1234yf)

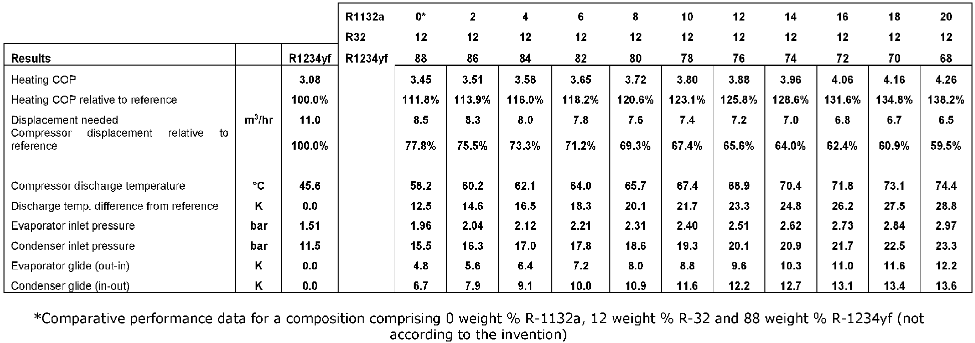

### Example 4 (ternary compositions comprising R-1132a, 20 wt% R-32 and R-1234yf)

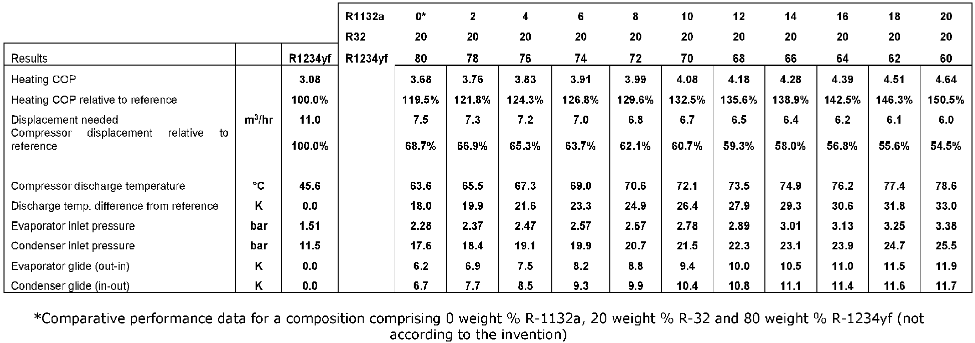

### Example 5 (binary compositions comprising R-1132a and R-152a)

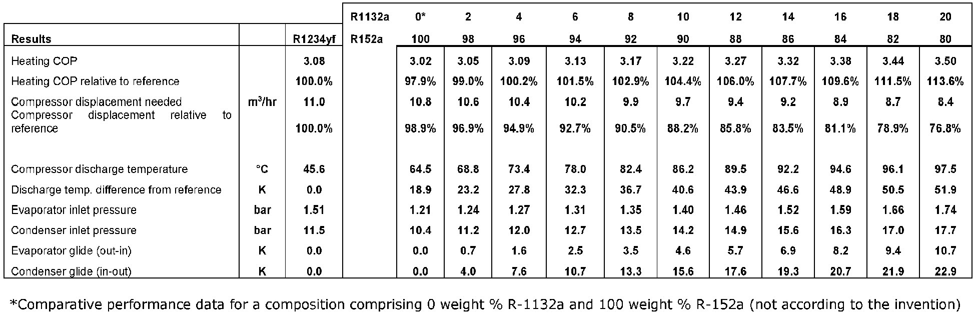

### Example 6 (ternary compositions comprising R-1132a, 8 wt% R-32 and R-1234yf)

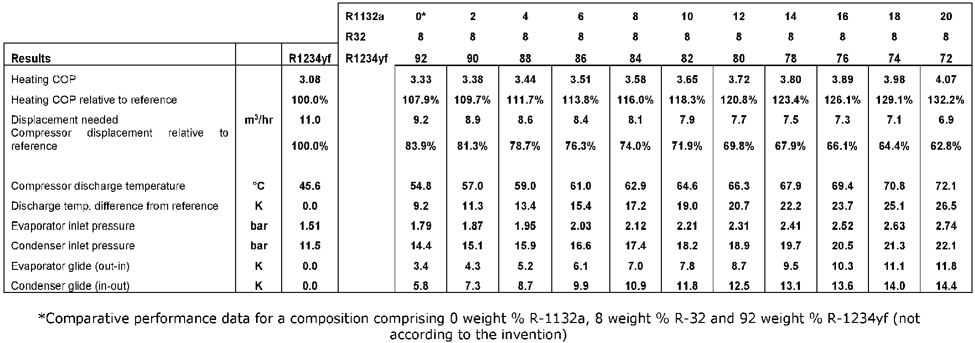

### Example 7 (ternary compositions comprising R-1132a, 16 wt% R-32 and R-1234yf)

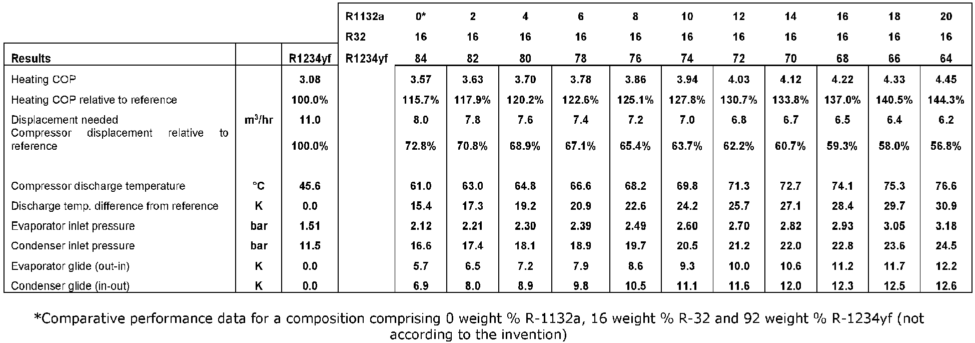

### Example 8 (ternary compositions comprising R-1132a, 21.5 wt% R-32 and R-1234yf)

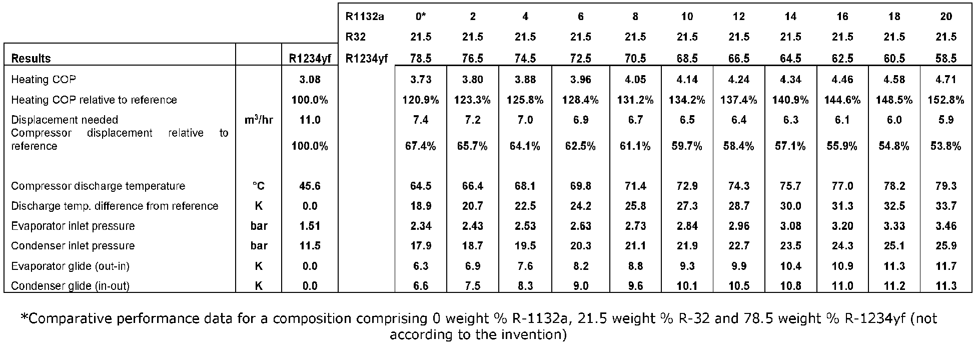

Air-conditioning performance was then assessed (Examples 9 and 10) using the following theoretical cycle modelling conditions representing operating in a high temperature ambient condition:

| **Data Input Section** | | **R1234yf** |
|---|---|---|
| Cooling duty | kW | 6 |
| Mean condenser temperature | °C | 65 |
| Mean evaporator temperature | °C | 5 |
| Condenser subcooling | K | 5 |
| Evaporator superheat | K | 5 |
| Evaporator pressure drop | bar | 0 |
| Suction line pressure drop | bar | 0 |
| Condenser pressure drop | bar | 0 |
| Compressor suction superheat | K | 10 |
| Isentropic efficiency | | 65% |

It was found possible to obtain improved heating mode performance and also to obtain cooling mode performance where the theoretical COP for cooling was within about 10% of that obtained with R-1234yf. The fluids of the invention would operate at higher pressure and reduced mass/volumetric flows compared to R-1234yf meaning that efficiency losses in a real system from pressure drop effects would also be reduced compared to R-1234yf.

### Example 9 (binary compositions comprising R-1132a and R-1234yf)

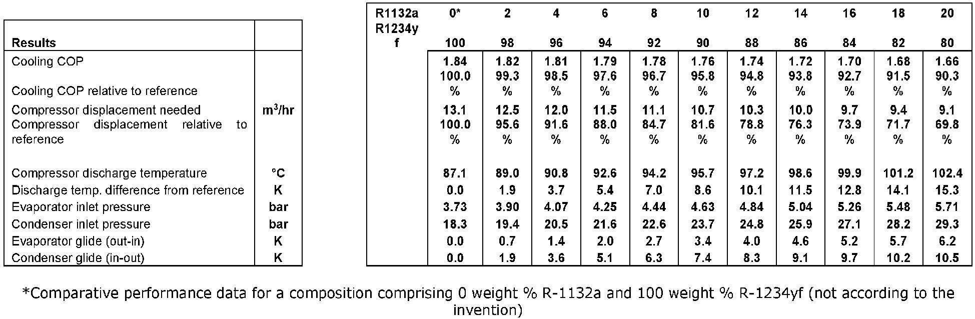

### Example 10 (ternary compositions comprising R-1132a, 8 wt% R-32 and R-1234yf))

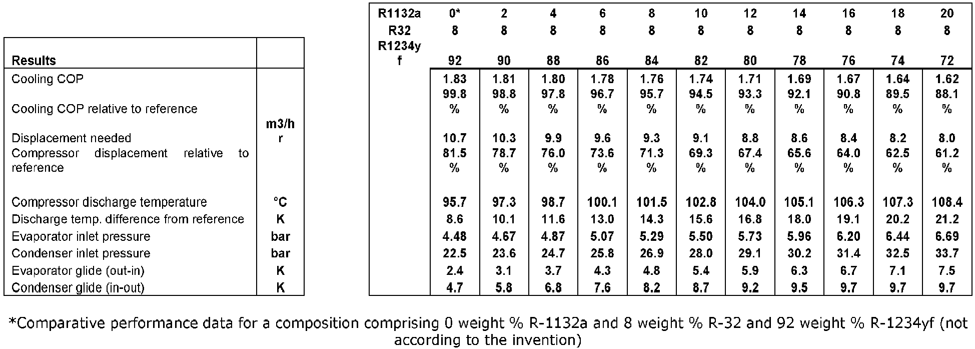

The performance of selected binary, ternary and quaternary compositions of the present invention in a heat pump cycle is further demonstrated in the Examples 11 to 27 below. Again, R-1234yf was chosen as the reference refrigerant for the cycle.

The following operating conditions were assumed:

| **Data Input Section** | | **R-1234yf** |
|---|---|---|
| Compressor displacement | m3/hr | 16.5 |
| Mean condenser temperature | °C | 45.0 |
| Mean evaporator temperature | °C | -25.0 |
| Condenser subcooling | K | 3.0 |
| Evaporator superheat | K | 1.0 |
| Evaporator pressure drop | bar | 0.20 |
| Suction line pressure drop | bar | 0.10 |
| Condenser pressure drop | bar | 0.20 |
| Compressor suction superheat | K | 10.0 |
| Isentropic efficiency | | 65.0% |

In summary, the modelled performance data demonstrates the following advantages of the compositions according to the present invention:
(a) Essentially equivalent or improved energy efficiency (COP) in heating mode cycle operation compared to R-1234yf alone
(b) Increased evaporation pressure, leading to higher volumetric capacity and better ability to operate at lower external air temperatures

Furthermore, performance in the air-conditioning cycle of selected binary blends comprising R-1132a and R-32 and ternary blends comprising R-1132a, R-32 and CO₂ is demonstrated in the Examples 28 to 30 below.

### Example 11 (binary compositions comprising R-1132a and R-1234ze(E))

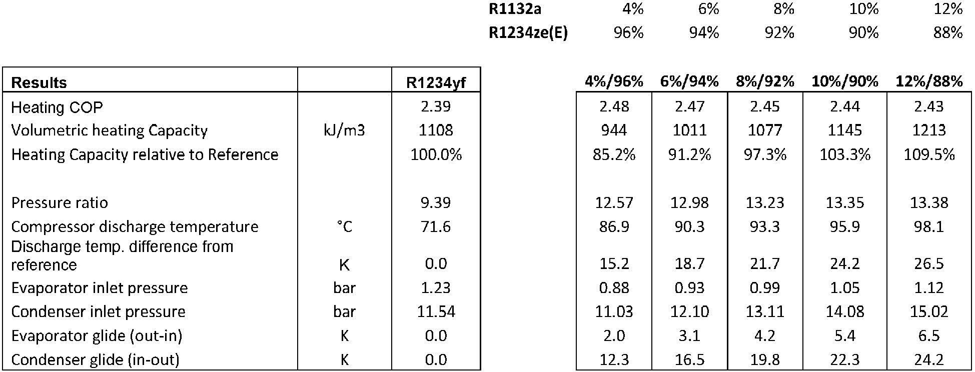

### Example 12 (binary compositions comprising R-1132a and CF₃I)

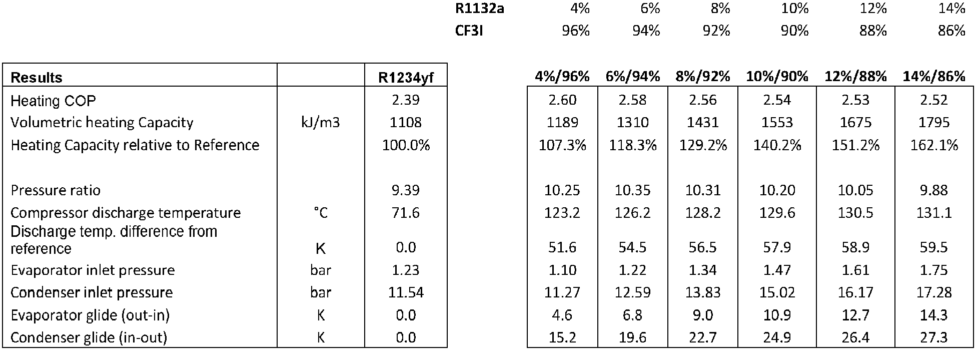

### Example 13 (ternary compositions comprising 4 wt% R-1132a, R-1234yf and CF₃I)

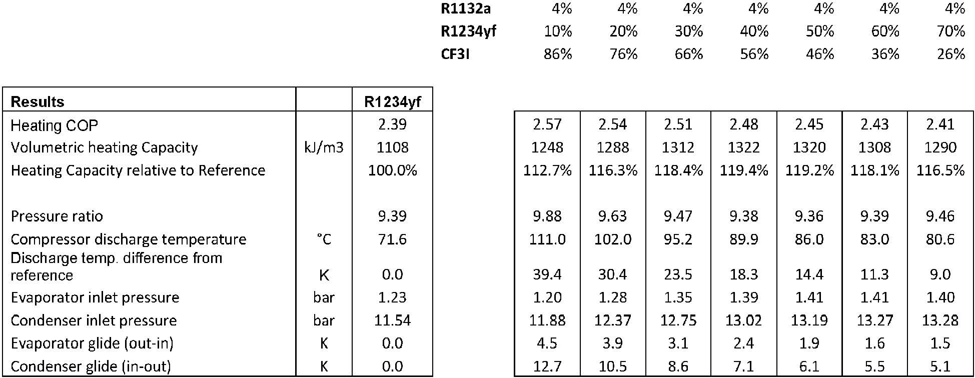

### Example 14 (ternary compositions comprising 8 wt% R-1132a, R-1234yf and CF₃I)

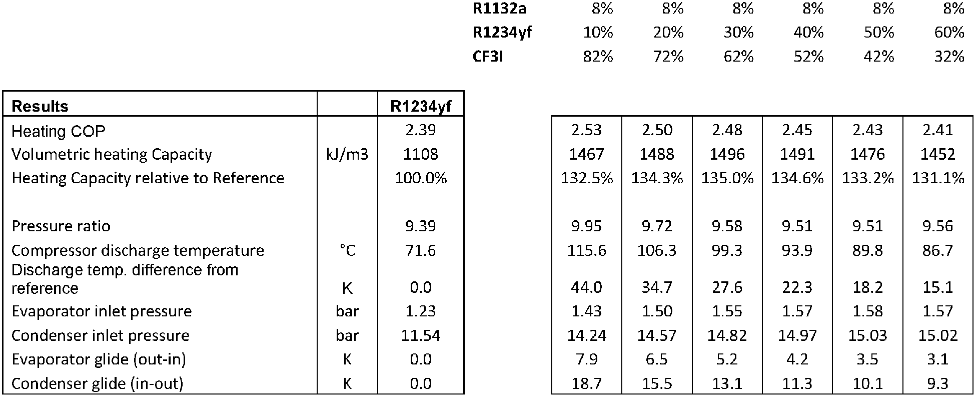

### Example 15 (ternary compositions comprising 10 wt% R-1132a, R-1234yf and CF₃I)

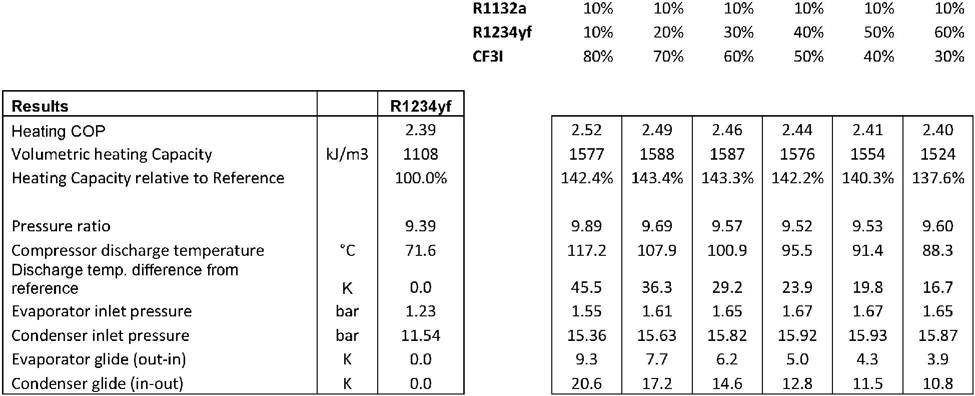

### Example 16 (quaternary compositions comprising 4 wt% R-1132a, 8 wt% R-32, R-1234yf and CF₃I)

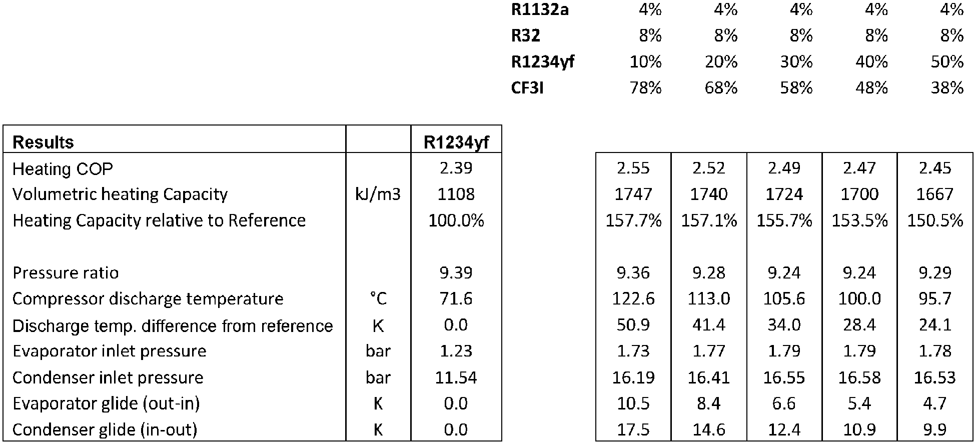

### Example 17 (ternary compositions comprising R-1132a, 5 wt% R-32 and R-152a)

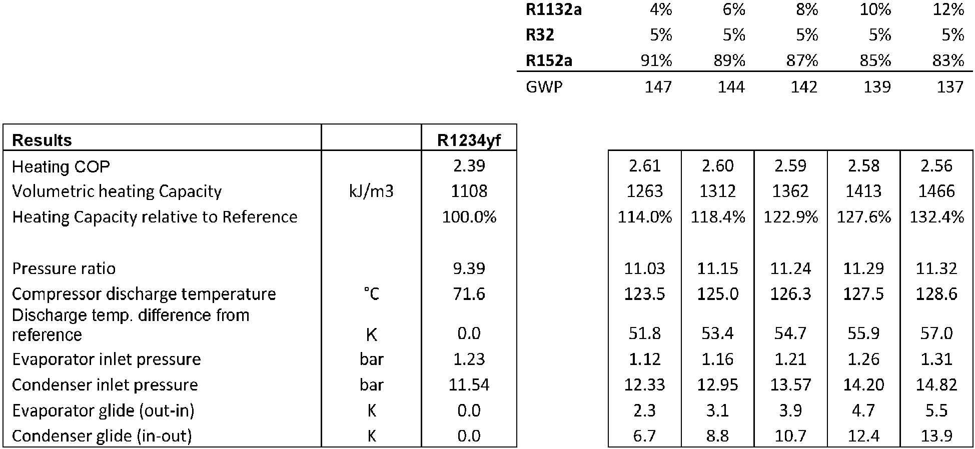

### Example 18 (quaternary compositions comprising 4 wt% R-1132a, 6 wt% R-32, R-1234yf and R-152a)

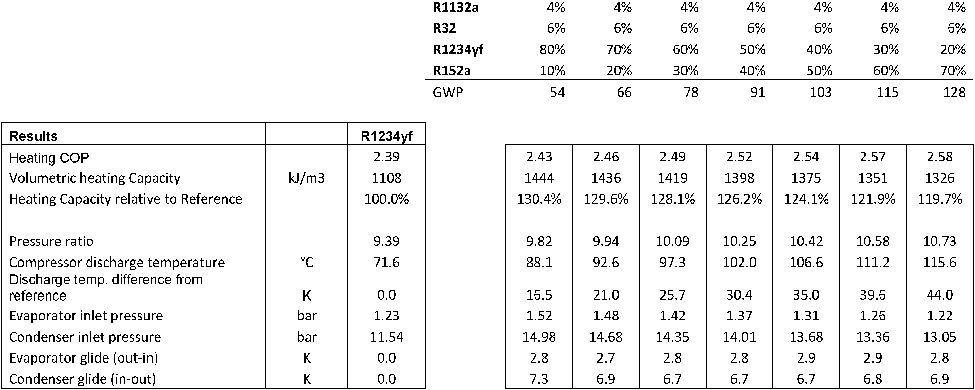

### Example 19 (quaternary compositions comprising 4 wt% R-1132a, 12 wt% R-32, R-1234yf and R-152a)

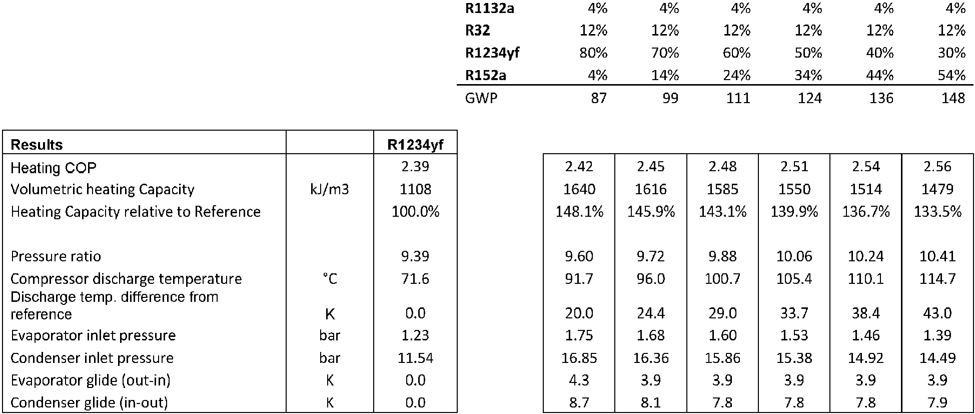

### Example 20 (quaternary compositions comprising 4 wt% R-1132a, 16 wt% R-32, R-1234yf and R-152a)

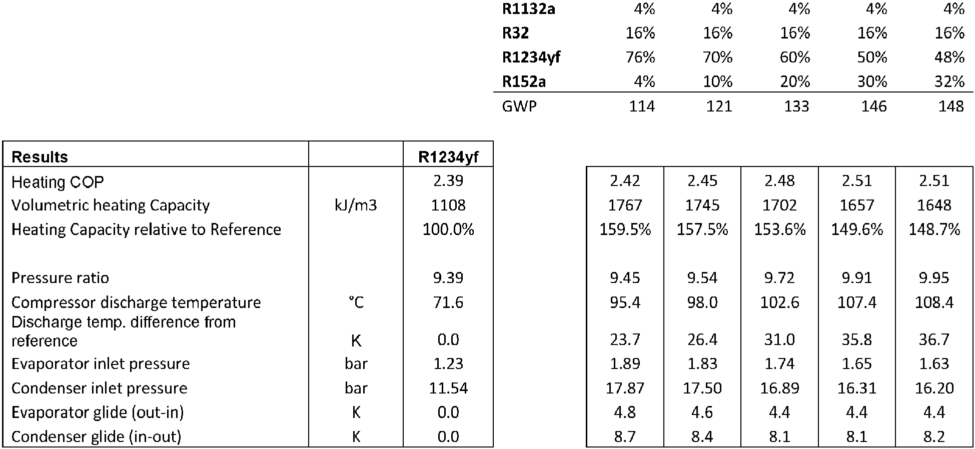

### Example 21 (quaternary compositions comprising 8 wt% R-1132a, 16 wt% R-32, R-1234yf and R-152a)

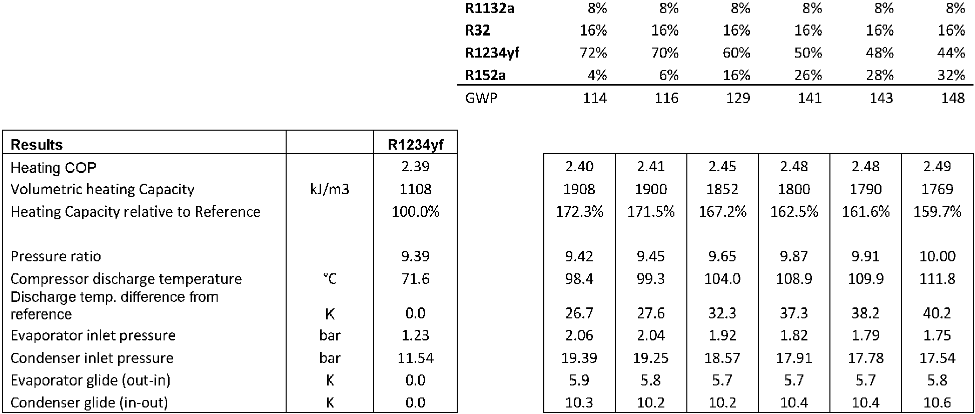

### Example 22 (ternary compositions comprising R-1132a, 10 wt% R-32 and R-1234ze(E) and R-1132a, 21 wt% R-32 and R-1234ze(E))

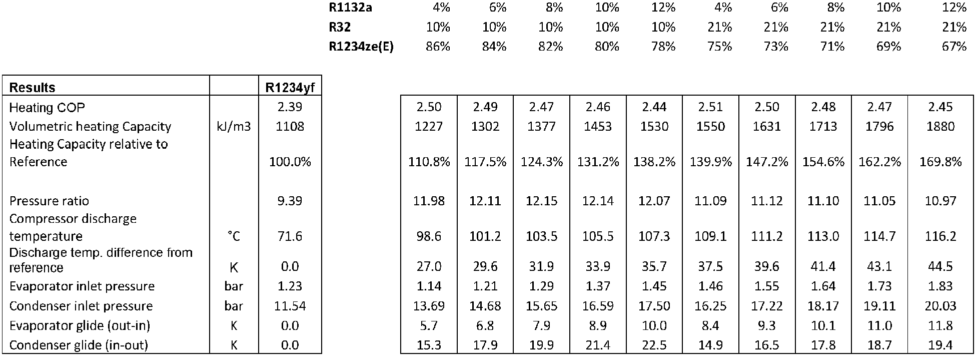

### Example 23 (quaternary compositions comprising 3 wt% R-1132a, 3 wt% CO₂, R-32 and R-1234yf)

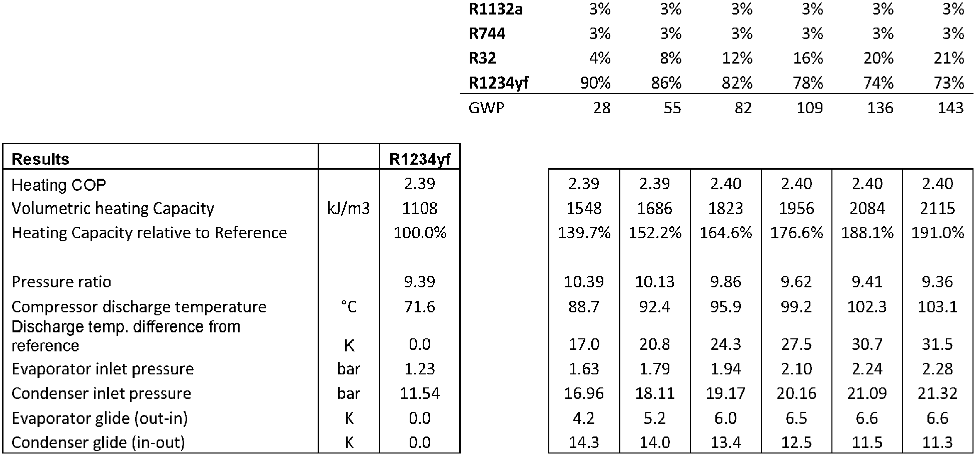

### Example 24 (quaternary compositions of 4 wt% R-1132a, 4 wt% CO₂, R-32 and R-1234yf)

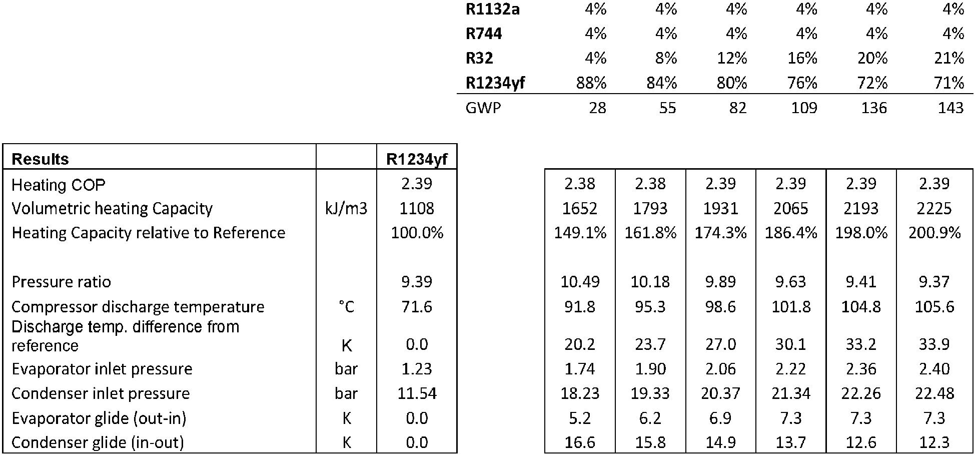

### Example 25 (quaternary compositions of 4 wt% R-1132a, 2 wt% CO₂, R-32 and R-1234yf)

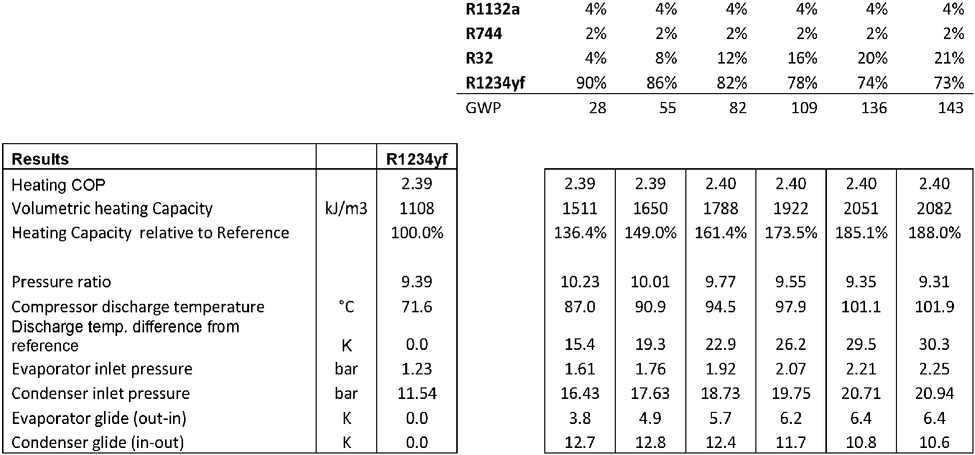

### Example 26 (quaternary compositions of 5 wt% R-1132a, 3 wt% CO₂, R-32 and R-1234yf)

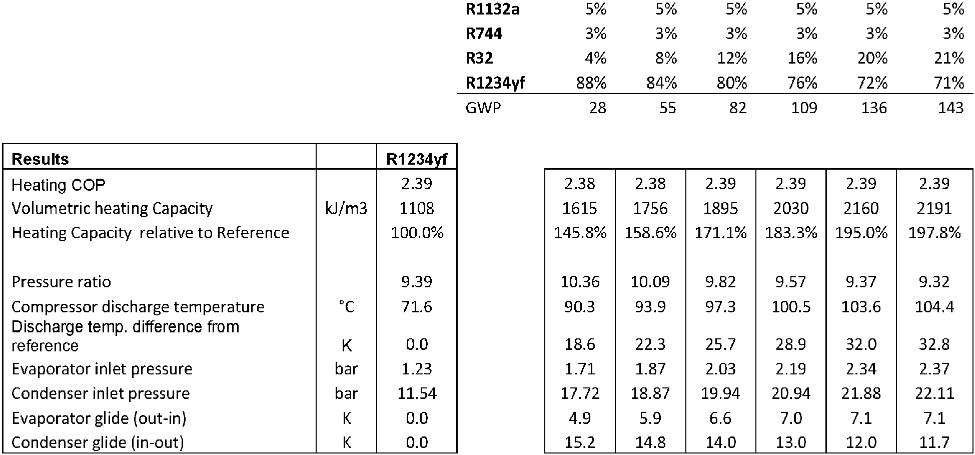

### Example 27 (ternary compositions of 4 wt% R-1132a, R-1123 and R-1234yf)

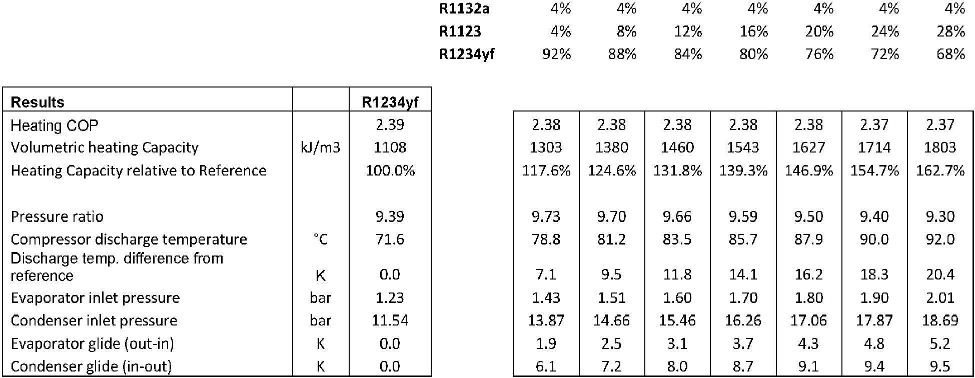

### Example 28 (ternary compositions of 6 wt% R-1132a, R-1123 and R-1234yf)

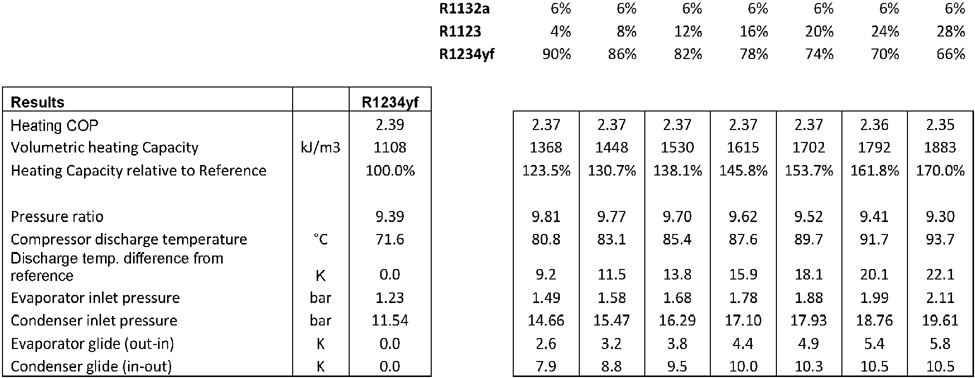

### Example 29 (ternary compositions of 8 wt% R-1132a, R-1123 and R-1234yf)

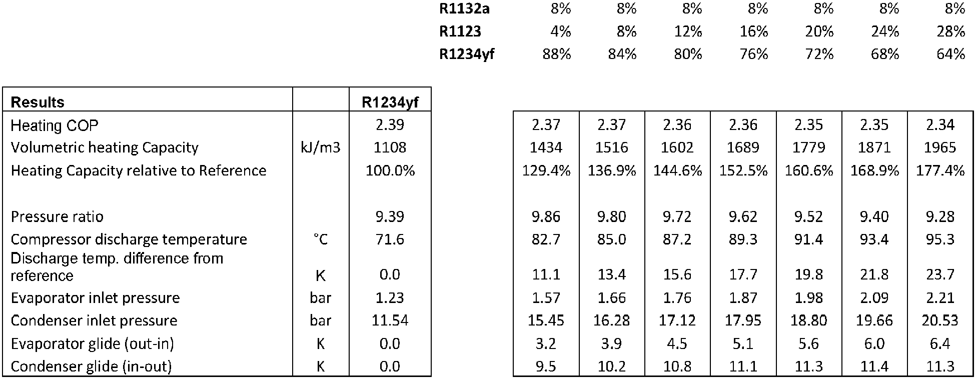

### Example 30 (ternary compositions of 10 wt% R-1132a, R-1123 and R-1234yf)

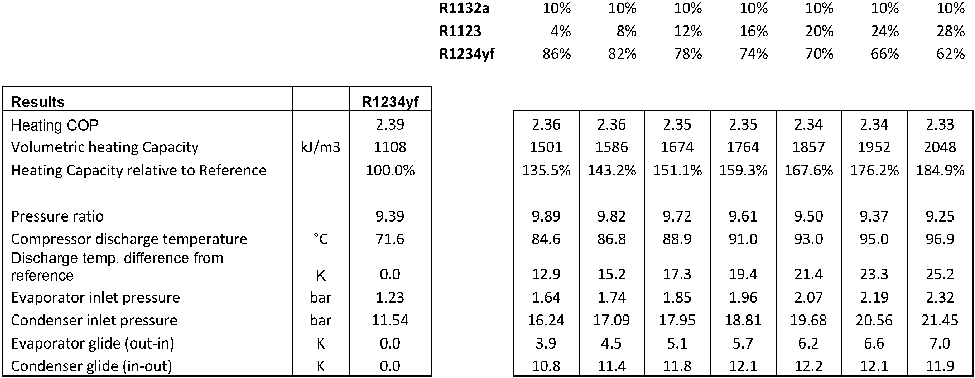

### Example 31 (ternary compositions of 4 weight % R-1132a, R-152a and R-1234yf)

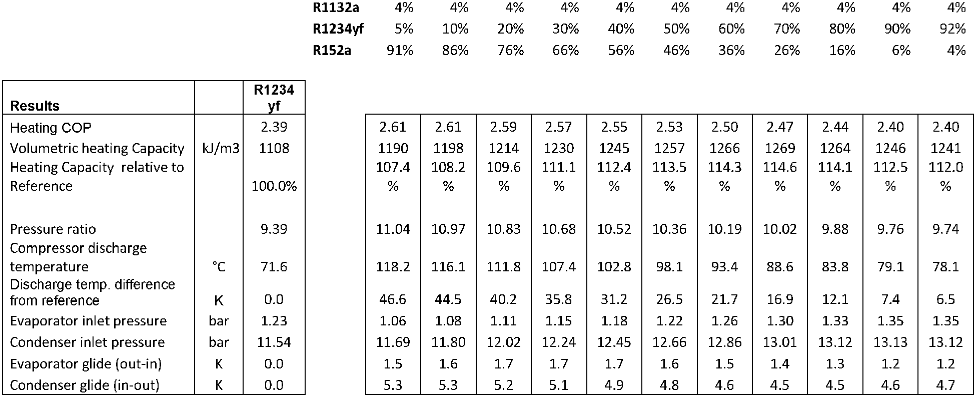

### Example 32 (ternary compositions of 6 weight % R-1132a, R-152a and R-1234yf)

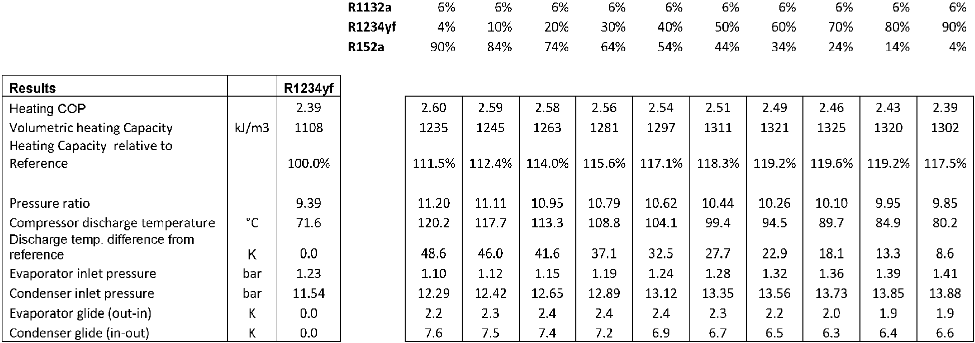

### Example 33 (ternary compositions of 8 weight % R-1132a, R-152a and R-1234yf)

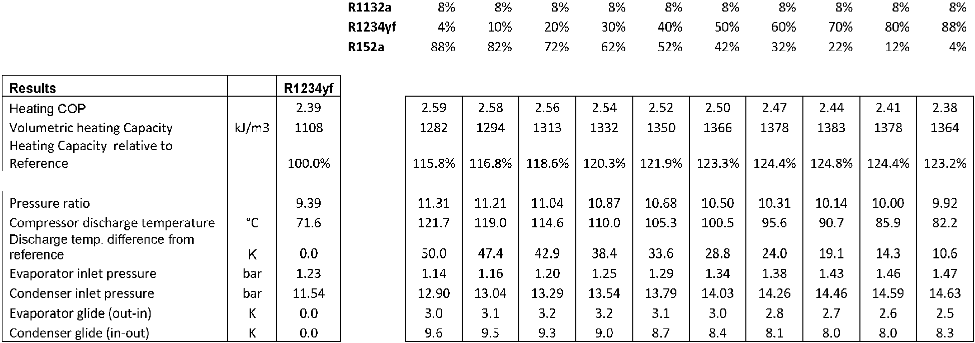

### Example 34 (ternary compositions of 10 weight % R-1132a, R-152a and R-1234yf)

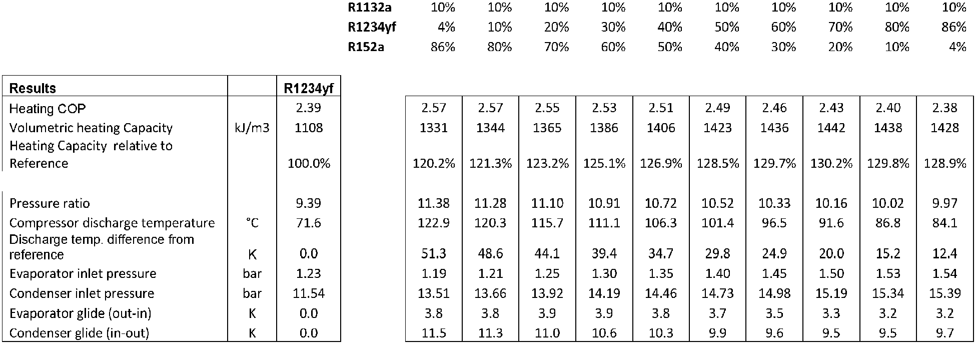

### Example 35 (ternary compositions of 4 wt% R-1132a, R-32 and CO₂ and ternary compositions comprising 8 wt% R-1132a, R-32 and CO₂)

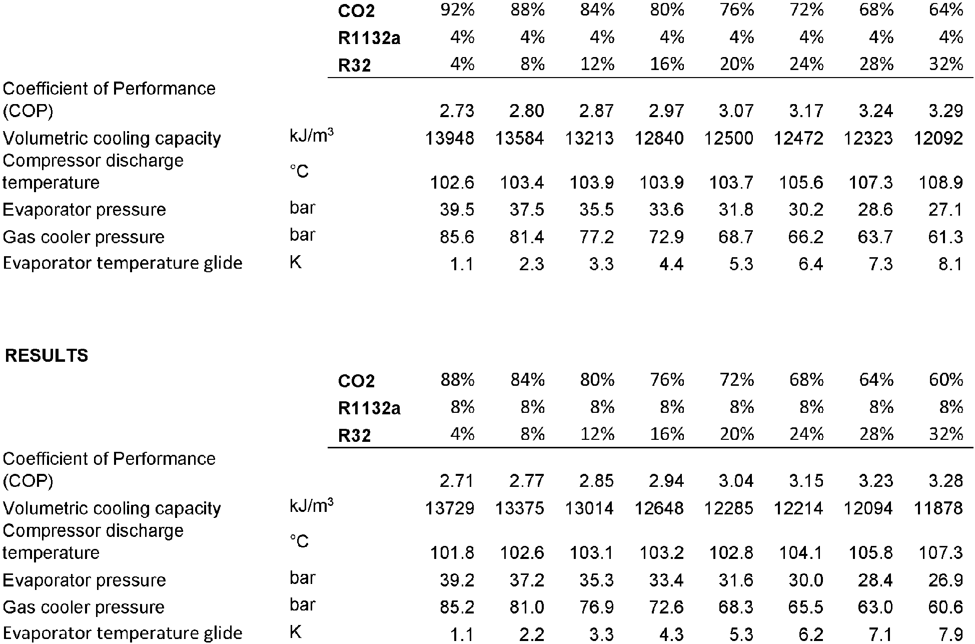

### Example 36 (ternary compositions of 10 wt% R-1132a, R-32 and CO₂ and ternary compositions comprising 14 wt% R-1132a, R-32 and CO₂)

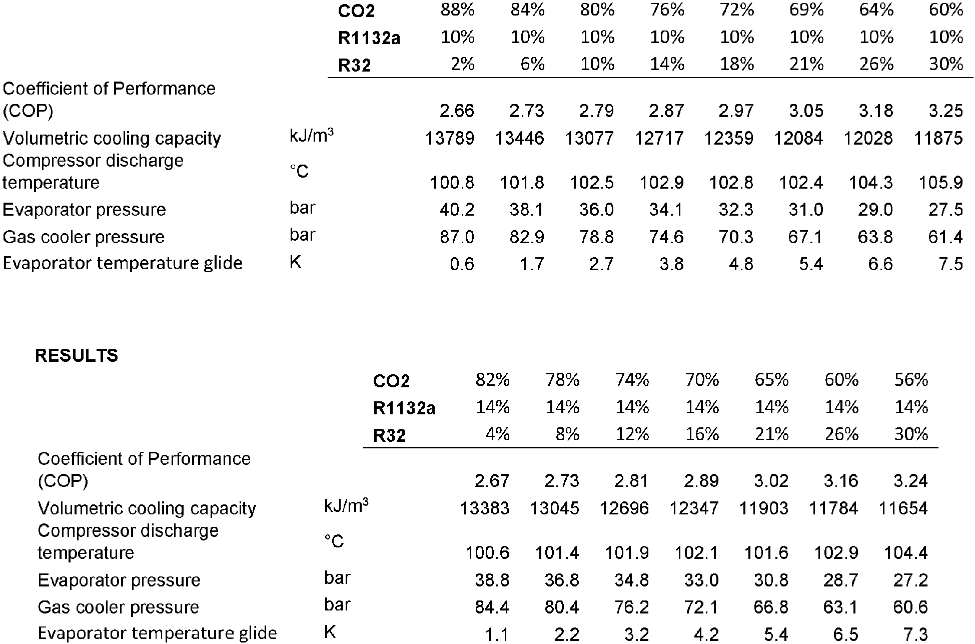

### Example 37 (binary compositions of R-1132a and R-32)

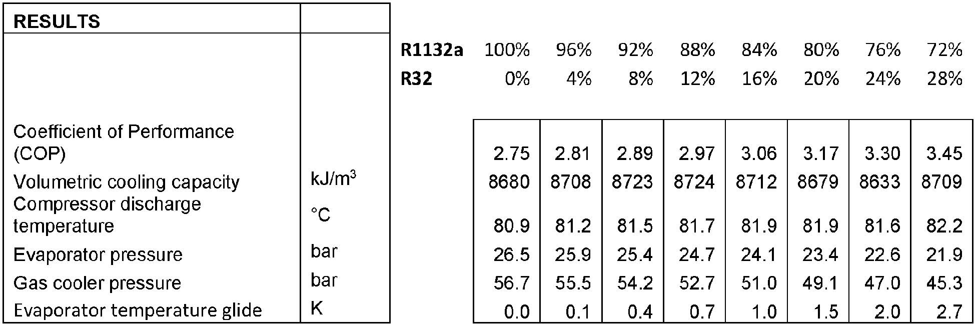

Example 38 illustrates the performance data of a ternary composition comprising 8 weight % R-1132a, 11 weight % R-32 and 81 weight % R-1234yf in a mobile heat pump/air-conditioner system for use in an electric car.

The system performance was run in cooling mode (air-conditioning) according to SAE Standard J2765 at three test conditions, using the same charge size of refrigerant for the blend as for R-1234yf. The compressor speed was reduced for the blend to achieve the same cooling capacity as R-1234yf at each test point, in accordance with the standard practice for comparison of different refrigerants.

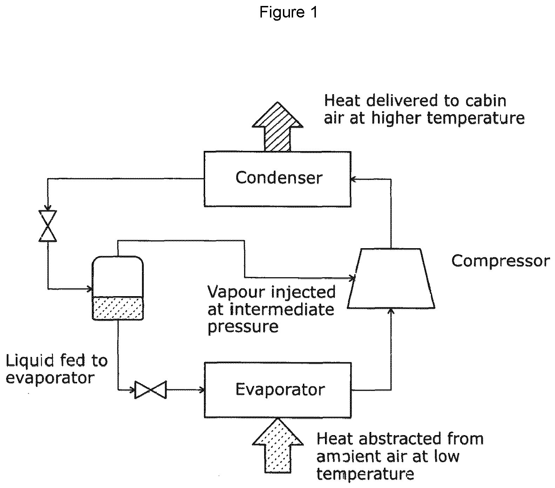

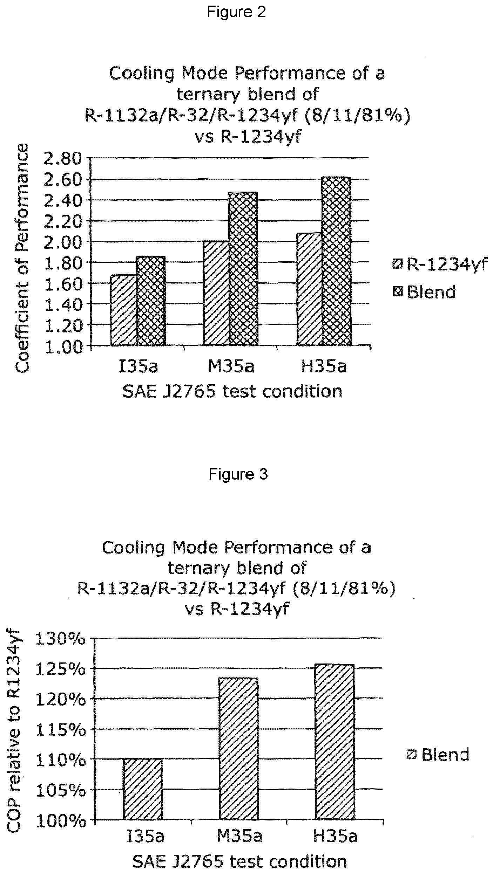

The results are shown below and illustrated in Figures 2 and 3. The tested composition was consistently able to deliver improved energy efficiency at each test point, with the Coefficient of Performance (COP) varying from 110% to 125% of the R-1234yf value.

### Example 38 (ternary composition of 8 weight % R-1132a, 11 weight % R-32 and 81 weight % R-1234yf)

| | | | **Condenser** | | **Evaporator** | | | |
|---|---|---|---|---|---|---|---|---|
| **Test Name** | **Ambient Temperature** | **Compressor speed** | **Air on temperature** | **Air face velocity** | **Air on temperature** | **relative humidity** | **Air mass flow** | **Target air off temperature** |
| | (°C) | (rpm) | (°C) | (m/s) | (°C) | (%) | (kg/min) | (°C) |
| **I35a** | 35 | 900 | 35 | 1.5 | 35 | 40 | 9 | 3 |
| **M35a** | 35 | 2500 | 35 | 3 | 35 | 40 | 9 | 3 |
| **H35a** | 35 | 4000 | 35 | 4 | 35 | 40 | 9 | 3 |

### Example 38 - continued

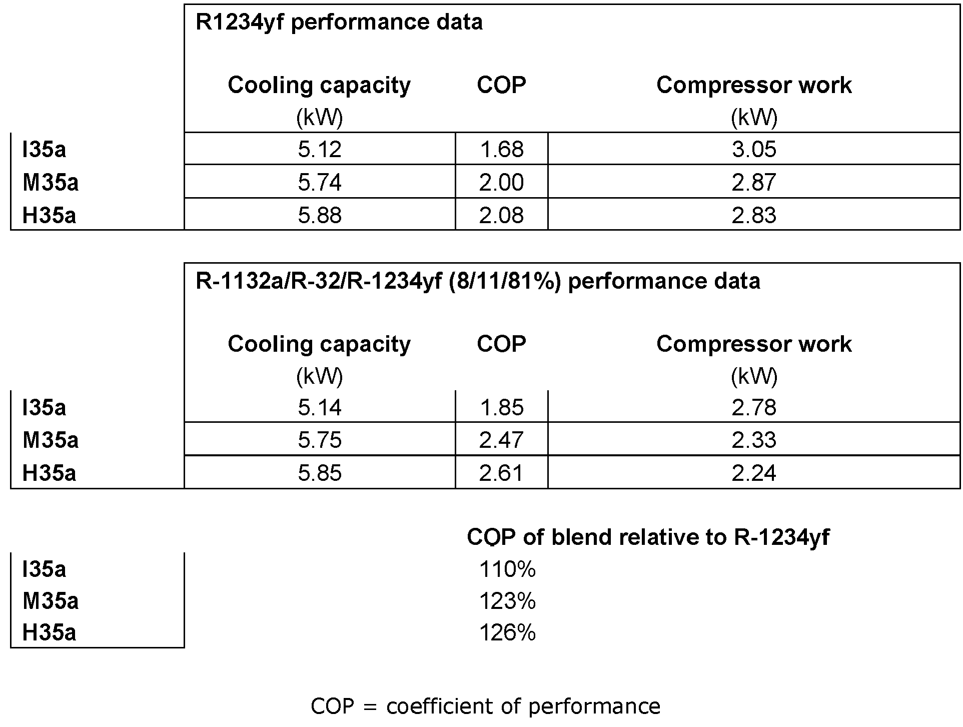

Embodiments of invention are defined in the following numbered paragraphs of the description.
1. Use as a refrigerant in a heat pump system in an electric vehicle of a composition comprising 1,1-difluoroethylene (R-1132a) and at least one fluorocarbon refrigerant compound selected from the group consisting of 2,3,3,3-tetrafluoropropene (R-1234yf), difluoromethane (R-32), 1,3,3,3-tetrafluoropropene (R-1234ze(E)) and 1,1-difluoroethane (R-152a).
2. The use of numbered paragraph 1 wherein the refrigerant composition further comprises at least one of trifluoroethylene (R-1123), trifluoroiodomethane (CF₃I), carbon dioxide (R-744, CO₂) and 1,1,1,2-tetrafluoroethane (R-134a).
3. Use as a refrigerant in a heat pump system in an electric vehicle of a composition comprising 1,1-difluoroethylene (R-1132a) and trifluoroiodomethane (CF₃I), preferably wherein the refrigerant composition comprises from about 1 to about 30 weight % R-1132a and from about 70 to about 99 weight % CF₃I.
4. The use of numbered paragraph 1 wherein the refrigerant composition comprises R-1132a, R-152a and R-1234yf, preferably from 2 to 14 weight % R-1132a, from 2 to 96 weight % R-152a and from 2 to 96 weight % R-1234yf, such as from 4 to 10 weight % R-1132a, from 2 to 30 weight % R-152a and from 60 to 94 weight % R-1234yf.
5. The use of numbered paragraph 1 wherein the refrigerant composition comprises R-1132a, at least one tetrafluoropropene refrigerant compound selected from the group consisting of R-1234yf and R-1234ze(E), and optionally difluoromethane (R-32).
6. The use of any of numbered paragraphs 1 to 5, wherein the R-1132a is present in an amount of from 1 to 30 weight %, preferably from 1 to 20 weight %, such as from about 3 to about 15 weight %, based on the total weight of the refrigerant composition.
7. The use of numbered paragraph 5 or 6, wherein R-32 is present in an amount of from 1 to 21 weight % based on the total weight of the refrigerant composition.
8. The use of numbered paragraph 5 wherein the refrigerant composition comprises:
   from 1 to 20 weight % R-1132a and from 99 to 80 weight % R-1234yf;
   from 1 to 20 weight % R-1132a and from 99 to 80 weight R-1234ze(E);
   from 1 to 20 weight % R-1132a, from 1 to 21 weight % R-32 and from 59 to 98 weight % R-1234yf; or
   from 1 to 20 weight % R-1132a, from 1 to 21 weight % R-32 and from 59 to 98 weight % R-1234ze(E).
9. The use of any of numbered paragraphs 5 to 8, wherein the refrigerant composition further comprises CF₃I, preferably wherein the CF₃I is present in an amount less than R-1234yf or R-1234ze(E).
10. The use of numbered paragraph 9 wherein the refrigerant composition comprises R-1132a, R-32, R- 1234yf and CF₃I.
11. The use of any of numbered paragraphs 5 to 8, wherein the refrigerant composition further comprises CO₂ (R-744), preferably wherein the combined CO₂ and R-1132a content is less than about 30 weight %, such as less than about 20 weight %.
12. The use of numbered paragraph 11 wherein the refrigerant composition comprises R-1132a, R-32, R- 1234yf and CO₂.
13. The use of numbered paragraph 1, 2 or 6 wherein the refrigerant composition comprises R-1132a, R- 152a and optionally R-32.
14. The use of numbered paragraph 13 wherein the refrigerant composition comprises:
   from 1 to 30 weight % R-1132a and from 99 to 70 weight % R-152a; or
   from 1 to 20 weight % R-1132a, from 1 to 10 weight % R-32 and from 70 to 98 weight % R- 152a.
15. The use of numbered paragraph 1, 2 or 6 wherein the refrigerant composition comprises R-1132a, R- 32, R-152a and at least one tetrafluoropropene refrigerant compound selected from the group consisting of R-1234yf and R-1234ze(E).
16. The use of numbered paragraph 15 wherein the refrigerant composition comprises:
   from 1 to 20 weight % R-1132a, from 1 to 21 weight % R-32 and from 59 to 98 weight % of a mixture of R-152a and R-1234yf; or
   from 1 to 20 weight % R-1132a, from 1 to 21 weight % R-32 and from 59 to 98 weight % of a mixture of R-152a and R-1234ze(E).
17. The use of any of numbered paragraphs 3 to 9 or 13 to 16 wherein the refrigerant composition further comprises R-134a, preferably in an amount of from about 1 to about 10 weight % R-134a.
18. The use of numbered paragraph 2 wherein the refrigerant composition comprises R-1132a, R-1123 and R-1234yf, preferably from about 1 to about 20 weight % R-1132a, from about 1 to about 20 weight % R-1123 and from about 98 to about 60 weight % R-1234yf.
19. The use of numbered paragraph 2 wherein the refrigerant composition comprises R-1132a, R-152a, R- 134a and R-1234yf, preferably from about 1 to about 20 weight % R-1132a, from about 5 to about 25 weight % R-152a, from about 1 to about 10 weight % R-134a and from about 93 to about 45 weight % R-1234yf.
20. The use of numbered paragraph 1 wherein the refrigerant composition comprises R-1132a and R-32, preferably from about 68 to about 99 weight % R-1132a and from about 1 to about 32 weight % R-32, for example from about 72 to about 96 weight % R-1132a and from about 4 to about 28 weight % R-32.
21. The use of numbered paragraph 2 wherein the refrigerant composition comprises R-1132a, R-32 and CO₂, preferably from about 1 to about 20 weight % R-1132a, from about 1 to about 32 weight % R-32 and from about 50 to about 95 weight % CO₂, such as from about 2 to about 15 weight % R-1132a, from about 2 to about 32 weight % R-32 and from about 55 to about 93 weight % CO₂, for instance from about 64 to about 93 weight % of carbon dioxide, from about 2 to about 25 weight % of difluoromethane and from about 2 to about 14 weight % of R-1132a, for example from about 65 to about 93 weight % of carbon dioxide, from about 2 to about 22 weight % of difluoromethane and from about 2 to about 14 weight % of R-1132a.
22. The use of any of the preceding numbered paragraphs wherein the refrigerant composition has a Global Warming Potential (GWP) below 150.
23. The use of any of the preceding numbered paragraphs wherein the heat pump system is also adapted to perform air-conditioning.
24. The use of any of numbered paragraphs 1 to 23 wherein the composition consists essentially of the stated components.
25. The use of any of the preceding numbered paragraphs, wherein the refrigerant composition is less flammable than R-1132a alone, preferably wherein the refrigerant composition has:
   a. a higher flammable limit'
   b. a higher ignition energy; and/or
   c. a lower flame velocity
   compared to R-1132a alone.
26. The use of any of the preceding numbered paragraphs wherein the refrigerant composition is non-flammable, preferably wherein the refrigerant composition is non-flammable at ambient temperature, or wherein the composition is non-flammable at 60 °C.
27. The use of any of the preceding numbered paragraphs wherein the heat pump system further comprises a lubricant, preferably a polyolester (POE) or polyalkylene glycol (PAG) lubricant.
28. The use of any of the preceding numbered paragraphs, wherein the refrigerant composition evaporates at temperatures below -30°C, preferably wherein the refrigerant composition also condenses at temperatures above 40°C.
29. The use of any of the preceding numbered paragraphs, wherein the refrigerant composition can operate in heat pump mode at an ambient temperature lower than about -15 °C, preferably lower than above -20°C.
30. The use of any of the preceding numbered paragraphs wherein the refrigeration composition has a temperature glide in an evaporator or condenser of less than about 15K, preferably less than about 10K, such as less than about 5K.
31. An electric vehicle equipped with a heat pump system and a refrigerant composition as defined in any of numbered paragraphs 1 to 30.
32. A method of producing cooling in an electric vehicle which method comprises evaporating a refrigerant composition as defined in any of numbered paragraphs 1 to 30 in the vicinity of a body to be cooled.
33. A method of producing heating in an electric vehicle which method comprises condensing a refrigerant composition as defined in any one of numbered paragraphs 1 to 30 in the vicinity of a body to be heated.

The invention is defined by the following claims.

## Claims

1. A refrigerant composition comprising 1,1-difluoroethylene (R-1132a), difluoromethane (R-32), 1,1-difluoroethane (R-152a) and at least one tetrafluoropropene refrigerant compound selected from the group consisting of 2,3,3,3-tetrafluoropropene (R-1234yf) and 1,3,3,3-tetrafluoropropene (R-1234ze(E)).

2. The composition according to Claim 1, wherein the composition comprises:
from 1 to 20 weight % R-1132a, from 1 to 21 weight % R-32 and from 59 to 98 weight % of a mixture of R-152a and R-1234ze(E); or
from 1 to 20 weight % R-1132a, from 1 to 21 weight % R-32 and from 59 to 98 weight % of a mixture of R-152a and R-1234yf.

3. A refrigerant composition comprising 1,1-difluoroethylene (R-1132a), at least one tetrafluoropropene refrigerant compound selected from the group consisting of 2,3,3,3-tetrafluoropropene (R-1234yf) and 1,3,3,3-tetrafluoropropene (R-1234ze(E) and optionally difluoromethane (R-32).

4. The composition according to Claim 3, wherein the R-32 is present in an amount of from 1 to 21 weight % based on the total weight of the composition.

5. The composition according to Claim 3, wherein the composition comprises:
from 1 to 20 weight % R-1132a and from 99 to 80 weight % R-1234yf; or
from 1 to 20 weight % R-1132a and from 99 to 80 weight % R-1234ze(E); or
from 1 to 20 weight % R-1132a, from 1 to 21 weight % R-32 and from 59 to 98 weight % R-1234yf; or
from 1 to 20 weight % R-1132a, from 1 to 21 weight % R-32 and from 59 to 98 weight % R-1234ze(E).

6. The composition according to any of the preceding claims, wherein the R-1132a is present in an amount of from 1 to 30 weight %, preferably from 1 to 20 weight %, such as from about 3 to about 15 weight %, based on the total weight of the composition.

7. The composition according to any of the preceding claims consisting essentially of the stated components.

8. The composition according to any of the preceding claims, wherein the composition has a Global Warming Potential (GWP) below 150.

9. The composition according to any of the preceding claims, wherein the composition is less flammable than R-1132a alone, preferably wherein the refrigerant composition has:
a. a higher flammable limit'
b. a higher ignition energy; and/or
c. a lower flame velocity
compared to R-1132a alone.

10. The composition according to any of the preceding claims, wherein the composition is non-flammable, preferably wherein the refrigerant composition is non-flammable at ambient temperature, or wherein the composition is non-flammable at 60 °C.

11. The composition according to any of the preceding claims, wherein the composition evaporates at temperatures below -30°C, preferably wherein the refrigerant composition also condenses at temperatures above 40°C and/or wherein the composition has a temperature glide in an evaporator or condenser of less than about 15 K, preferably less than about 10 K, such as less than about 5 K.

12. The composition according to any of the preceding claims, wherein the composition can operate in heat pump mode at an ambient temperature lower than about -15 °C, preferably lower than above -20 °C.

13. Use as a refrigerant in a heat pump system in an electric vehicle of a composition according to any of the preceding claims.

14. The use according to Claim 13, wherein the heat pump system is also adapted to perform air-conditioning.

15. The use of according to Claim 13 or 14, wherein the heat pump system further comprises a lubricant, preferably a polyolester (POE) or polyalkylene glycol (PAG) lubricant.

16. An electric vehicle equipped with a heat pump system and a refrigerant composition as defined in any of claims 1 to 12.

17. A method of producing cooling in an electric vehicle which method comprises evaporating a refrigerant composition as defined in any of claims 1 to 12 in the vicinity of a body to be cooled.

18. A method of producing heating in an electric vehicle which method comprises condensing a refrigerant composition as defined in any one of claims 1 to 12 in the vicinity of a body to be heated.
